(19) Europäisches Patentamt / European Patent Office / Office européen des brevets

(11) **EP 4 184 222 B1**

(12) **EUROPEAN PATENT SPECIFICATION**

(45) Date of publication and mention
of the grant of the patent:
**26.03.2025 Bulletin 2025/13**

(21) Application number: **21843435.5**

(22) Date of filing: **14.06.2021**

(51) International Patent Classification (IPC):
***G01W 1/14*** *(2006.01)*     ***G01S 19/14*** *(2010.01)*
***G01S 19/07*** *(2010.01)*     ***G06N 20/00*** *(2019.01)*

(52) Cooperative Patent Classification (CPC):
**G01S 19/14; G01W 1/14;** G01S 19/07; G06N 20/00;
Y02A 90/10

(86) International application number:
**PCT/JP2021/022472**

(87) International publication number:
**WO 2022/014229 (20.01.2022 Gazette 2022/03)**

(54) **PRECIPITABLE WATER ESTIMATION MODEL LEARNING SYSTEM, PRECIPITABLE WATER ESTIMATION SYSTEM, METHOD, AND PROGRAM**

LERNSYSTEM FÜR EIN MODELL ZUR SCHÄTZUNG VON NIEDERSCHLAGSWASSER, LERNSYSTEM FÜR NIEDERSCHLAGSWASSER, VERFAHREN UND PROGRAMM

SYSTÈME D'APPRENTISSAGE DE MODÈLES D'ESTIMATION D'EAU PRÉCIPITABLE, SYSTÈME D'ESTIMATION D'EAU PRÉCIPITABLE, PROCÉDÉ, ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2020 JP 2020120319**

(43) Date of publication of application:
**24.05.2023 Bulletin 2023/21**

(73) Proprietor: **FURUNO ELECTRIC CO., LTD.
Nishinomiya-City, Hyogo 662-8580 (JP)**

(72) Inventor: **IWAHORI, Taiki
Nishinomiya-City, Hyogo 6628580 (JP)**

(74) Representative: **Müller Hoffmann & Partner
Patentanwälte mbB
St.-Martin-Straße 58
81541 München (DE)**

(56) References cited:
WO-A1-2020/230501    JP-A- 2008 014 939
JP-A- 2010 060 444    JP-A- 2010 060 444
JP-A- 2017 207 459    JP-A- 2018 072 308
JP-A- 2018 197 734    JP-A- H07 146 375
JP-A- H09 257 951    US-A- 5 999 121
US-A- 6 067 852    US-A1- 2014 035 779
US-A1- 2014 035 779

• **PATRIZIA BASILI ET AL: "Atmospheric Water
Vapor Retrieval by Means of Both a GPS Network
and a Microwave Radiometer During an
Experimental Campaign in Cagliari, Italy, in
1999", IEEE TRANSACTIONS ON GEOSCIENCE
AND REMOTE SENSING, IEEE, USA, vol. 39, no.
11, 1 November 2001 (2001-11-01), XP011021865,
ISSN: 0196-2892**

**EP 4 184 222 B1**

**Description**

The disclosure relates to a learning system of a precipitable water vapor estimation model, a precipitable water vapor estimation system, a method, and a program.

It has been known to use a GNSS receiver, a microwave radiometer, etc. for the observation of a precipitable water vapor, that is, the observation of water vapor.

Water vapor observation based on a GNSS receiver utilizes multi-frequency radio waves emitted from satellites. If radio waves of two or more different frequencies emitted from four or more satellites can be received, an amount of delay in the radio waves can be detected. The amount of delay in radio waves corresponds to the water vapor amount, making it possible to observe the water vapor amount. Water vapor observation using a global navigation satellite system (GNSS) can provide stable measurement without calibration. As GNSS involves satellites distributed all over the sky, it is possible to obtain an average value of water vapor over a wide range of the sky, but water vapor in a local range cannot be observed. Patent Document 1 describes such a water vapor observation based on GNSS.

Water vapor observation based on a microwave radiometer exploits the radiation of radio waves from water vapor in the atmosphere and measures radio waves from water vapor and cloud. With the directivity of an antenna or a horn of a receiver, it is possible to measure water vapor in a local range of the sky compared to water vapor observation based on GNSS. However, regular calibration with liquid nitrogen is required to prevent equipment drift and to measure the correct brightness temperature. Nonetheless, liquid nitrogen is difficult to transport and handle. Patent Document 2 describes such a microwave radiometer.

US 6 067 852 A discloses a GPS survey with correction of errors arising from variations in atmospheric water content, comprising a GPS network of 24 satellites and one earth-based GPS receiver. Precipitable water vapor is obtained from the zenith wet delay. Calibration is ensured by obtaining an independent water vapor measurement using e.g. a water vapor radiometer.

"Atmospheric Water Vapor Retrieval by Means of Both a GPS Network and a Microwave Radiometer During an Experimental Campaign in Cagliari, Italy, in 1999" by Basili et al. (IEEE TRANSACTIONS ON GEOSCIENCE AND REMOTE SENSING, IEEE, USA, vol. 39, no. 11, 1 November 2001) discloses a comparison of different measurement techniques for evaluating integrated precipitate water vapor including estimates obtained from a network of ground-based GPS receivers, radiosonde observations, and estimates from a ground-based water vapor radiometer.

Conventional Art Documents

Patent Document

Patent Document 1: JP 2010060444 A.

Patent Document 2: US 2014035779 A1.

The disclosure provides techniques to make it possible to observe a precipitable water vapor in a local range without calibration using liquid nitrogen.

Means to Solve Problems

The above problem is solved by the claimed subject-matter which defines the present invention.

FIG. 1 is a block diagram showing a configuration of a learning system of a precipitable water vapor estimation model and a precipitable water vapor estimation system according to an embodiment.
FIG. 2 is a flowchart showing a process executed by the learning system.
FIG. 3 is a flowchart showing a process executed by the precipitable water vapor estimation system.
FIG. 4 is a diagram showing a frequency spectrum of radio wave intensity received by a microwave radiometer.
FIG. 5 is a diagram showing comparison between a precipitable water vapor in a period estimated by the precipitable water vapor estimation system and a precipitable water vapor in the same period based on Sonde data.

An embodiment of the disclosure will be described below with reference to the drawings.

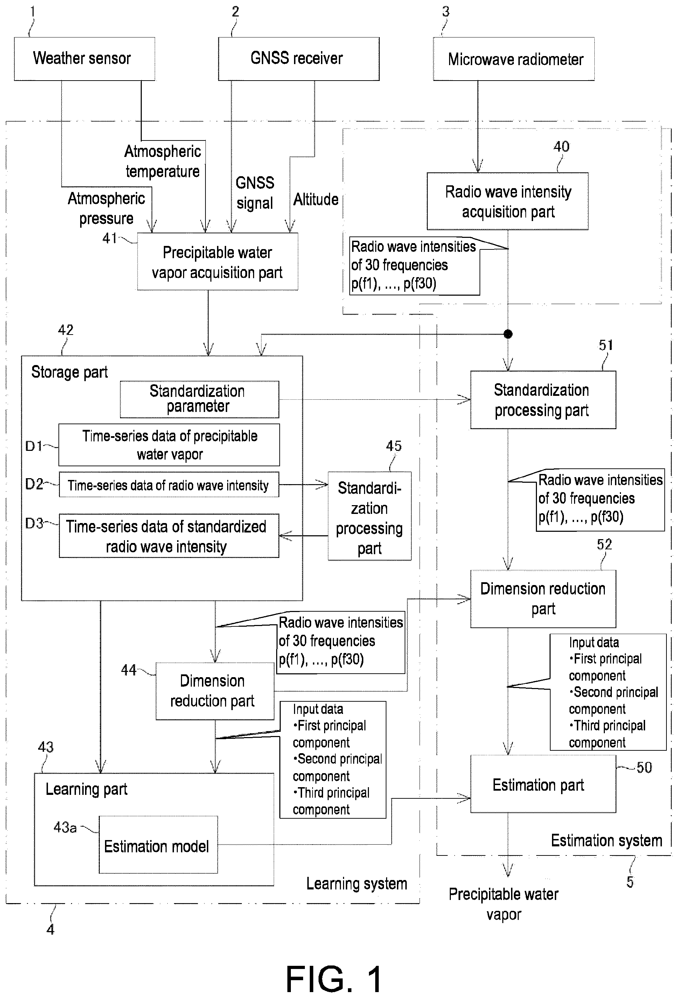

FIG. 1 is a view showing a configuration of a learning system 4 of a precipitable water vapor estimation model and a precipitable water vapor estimation system 5 (also referred to as an estimation system 5) according to this embodiment.

As shown in FIG. 1, in this embodiment, the learning system 4 of the precipitable water vapor estimation model and the precipitable water vapor estimation system 5 are built on a same computer system, but they may be operated independently. That is, it is possible that only the learning system 4 is installed, or only the precipitable water vapor estimation system 5 is installed.

<Learning system 4>

The learning system 4 shown in FIG. 1 includes a radio wave intensity acquisition part 40, a precipitable water vapor acquisition part 41, and a learning part 43.

The radio wave intensity acquisition part 40 shown in FIG. 1 acquires radio wave intensities of a plurality of frequencies among radio waves received by a microwave radiometer 3. In this embodiment, radio wave intensities of N (N=30) different frequencies of 18 GHz or more and within 26.5 GHz are acquired. The radio wave intensity acquisition part 40 acquires radio wave intensities [p(f1), p(f2), ..., p(f29), p(f30)] of 30 different frequencies (f1, f2, ..., f29, f30). Herein, the radio wave intensity is indicated as p(f), where f indicates the frequency. The radio wave intensities of a plurality of frequencies acquired by the radio wave intensity acquisition part 40 are stored to a storage part 42 as time-series data D2 of radio wave intensities.

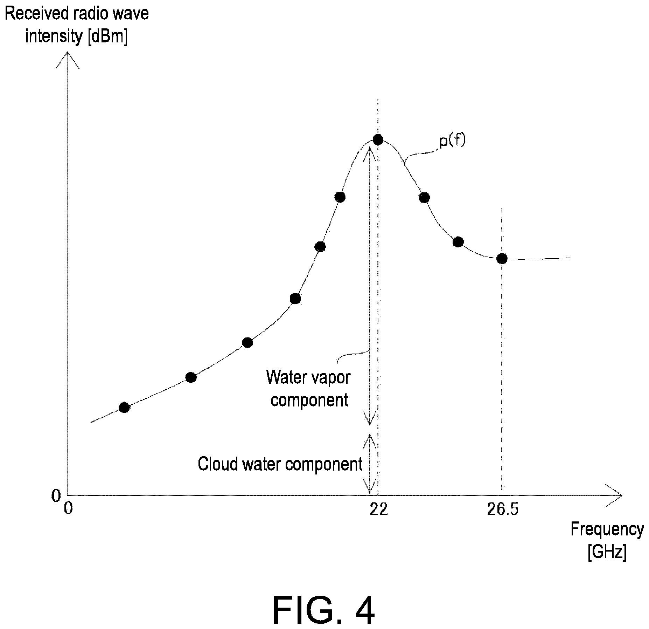

As shown in FIG. 4, the peak of intensity of radio waves radiated from water vapor and cloud water in the sky is at 22 GHz. In FIG. 4, the received intensity p(f) of the microwave radiometer 3 is shown, where f indicates the frequency. For example, a radio wave of 22 GHz contains a precipitable water vapor, that is, a water vapor component, and a cloud water component. To remove the cloud water amount contained in the radio wave of 22 GHz, the cloud water component is calculated based on radio wave intensities of frequencies other than 22 GHz. Thus, radio wave intensities of a plurality of mutually different frequencies are required. Although 22 GHz has been shown as an example, since the water vapor component and the cloud water component are also contained in frequencies other than 22 GHz, the combination of frequencies is not limited to a combination of 22 GHz and frequencies other than 22 GHz. In this embodiment, "N=30" has been set, but the number of N may be changed as appropriate. The frequency range may include 22 GHz or 22 GHz $\pm$ 1 GHz. Although N=30 in this embodiment, it is not limited thereto. N may be a natural number of 3 or more to improve the accuracy of specifying the water vapor component and the cloud water component.

In addition, in this embodiment, a black body is periodically passed through a receiving range of an antenna of the microwave radiometer 3 by an actuator, and the radio wave from the black body whose intensity is known and the radio wave from the sky are received. The received intensity p(f) of the microwave radiometer 3 is a radio wave intensity ps(f) from the sky minus a radio wave intensity pb(f) from the black body. Of course, the microwave radiometer 3 is not limited thereto, and a mirror may be periodically moved to receive radio waves from the black body.

The precipitable water vapor acquisition part 41 shown in FIG. 1 acquires a precipitable water vapor calculated based on an atmospheric delay (strictly speaking, a tropospheric delay) of a GNSS signal received by a GNSS receiver 2. It is known that a precipitable water vapor (precipitable water vapor; PWV) according to GNSS may be calculated based on a GNSS signal, a coordinate value such as an altitude, an atmospheric temperature, and an atmospheric pressure. The precipitable water vapor acquisition part 41 acquires a GNSS precipitable water vapor using a GNSS signal and altitude information obtained from the GNSS receiver 2, and an atmospheric temperature and an atmospheric pressure obtained from a weather sensor 1. The GNSS precipitable water vapor acquired by the precipitable water vapor acquisition part 41 is stored to the storage part 42 as time-series data D1 of precipitable water vapor of GNSS.

The learning part 43 shown in FIG. 1 subjects an estimation model 43a to machine learning based on the time-series data D1 of precipitable water vapor and the time-series data D2 of radio wave intensity. Specifically, based on the radio wave intensities of the plurality of frequencies and the precipitable water vapor at a plurality of time points in a particular period, the learning part 43 subjects the estimation model 43a to machine learning such that an input data based on the radio wave intensities of the plurality of frequencies is taken as an input to output the precipitable water vapor. A teacher data set used by the learning part 43 is data in which a precipitable water vapor at a time point t is associated with an input data based on radio wave intensities [p(f1), p(f2), ..., p(f29), p(f30)] of a plurality of frequencies at the same time point t. As long as the input data is a data based on radio wave intensities of a plurality of frequencies, the input data may be the radio wave intensities themselves of the plurality of frequencies, or may be a data obtained by reducing the dimension of the radio wave intensities of the plurality of frequencies. If the estimation model 43a is a supervised machine learning model, various models such as linear regression, regression trees, random forests, support vector machines, neural networks, ensemble, etc. may be used. In this embodiment, although will be described in detail later, a polynomial regression using terms of second order or higher, which is a multiple regression with multiple types of variables, is adopted, but the embodiment is not limited thereto.

As shown in FIG. 1, the learning system 4 may include a dimension reduction part 44 which performs a dimension reduction process on radio wave intensities of a plurality of frequencies and calculates a dimensionally reduced input data representing the radio wave intensities of the plurality of frequencies. By reducing the dimension, it is possible to reduce the number of dimensions while reproducing the original features that are present in the radio wave intensities of the plurality of frequencies, making it possible to reduce the calculation cost and avoid the curse of dimensionality (overlearning). The dimension reduction method of this embodiment is principal component analysis (PCA), but the dimension reduction method is not limited thereto, and other algorithms such as factor analysis, multiple factor analysis, Autoencoder, independent component analysis, non-negative matrix factorization, etc. may also be used.

In this embodiment, using principal component analysis, the dimension reduction part 44 selects a first principal component, a second principal component, and a third principal component as the input data. Of course, the embodiment is not limited thereto, and various modifications are possible. For example, the input data may be the first principal component only of the principal component analysis, or may be the first principal component and the second principal component. That is, a particular number (an arbitrary natural number of 1 or more) of principal components from the first order onward are selected as the input data. The particular number may be appropriately set according to the required accuracy. The reason why the first principal component is always included is that the reproducibility of the original feature of the first principal component is the highest.

A standardization processing part 45 shown in FIG. 1 performs a standardization process on radio wave intensities [p(f1), p(f2), ..., p(f29), p(f30)] of a plurality of frequencies at a plurality of time points before the dimension reduction process according to principal component analysis is performed. The standardization processing part 45 performs a standardization process on the time-series data D2 of radio wave intensity stored in the storage part 42, and stores time-series data D3 of standardized radio wave intensity to the storage part 42. The standardization process is a process for performing centering to set the mean to 0 and performing scaling to set the standard deviation to 1. In the standardization process, by calculating a mean and a standard deviation for respective radio wave intensities at a plurality of time points and dividing, by the standard deviation, a value obtained by subtracting the mean from the original data, each original radio wave intensity is converted into a standardized radio wave intensity. The calculated mean and standard deviation are stored to the storage part 42 as standardization parameters for use in a standardization process of the precipitable water vapor estimation system 5 to be described later (see FIG. 1).

The learning system 4 of this embodiment includes the dimension reduction part 44 and the standardization processing part 45, but these parts may also be omitted.

<Specific examples of learning part 43 and estimation model 43a>

Taking a first principal component PC1, a second principal component PC2, and a third principal component PC3 as an input data, the learning part 43 shown in FIG. 1 constructs an estimation model 43a for calculating a precipitable water vapor (PWV). The estimation model 43a is a conversion formula using multiple regression and is expressed by Formula (1) below. By performing fitting using the least squares method, the following unknown coefficients $S_1$ to $S_{10}$ are calculated to construct the estimation model 43a.

[Math 1]

$$PWV = func\left(PC1, PC2, PC3\right)$$

$$= \begin{pmatrix} S_1 & S_2 & S_3 & S_4 & S_5 & S_6 & S_7 & S_8 & S_9 & S_{10} \end{pmatrix} \begin{pmatrix} PC1^2 \\ PC2^2 \\ PC3^2 \\ PC1 \\ PC2 \\ PC3 \\ PC1 \cdot PC2 \\ PC1 \cdot PC3 \\ PC2 \cdot PC3 \\ 1 \end{pmatrix} \cdots (1)$$

<Precipitable water vapor estimation system 5>

The precipitable water vapor estimation system 5 shown in FIG. 1 includes the radio wave intensity acquisition part 40 and an estimation part 50. Using the estimation model 43a constructed by the learning part 43, the estimation part 50 receives an input data based on radio wave intensities of a plurality of frequencies acquired by the radio wave intensity acquisition part 40 and outputs a corresponding precipitable water vapor. Although the radio wave intensities [p(f1), p(f2), ..., p(f29), p(f30)] of a plurality of frequencies at an estimation time point may be inputted to the estimation part 50, to improve accuracy, a standardization processing part 51 and a dimension reduction part 52 may be provided.

Using predetermined parameters, the standardization processing part 51 shown in FIG. 1 performs a standardization process on the radio wave intensities of the plurality of frequencies before a dimension reduction process is performed by the dimension reduction part 52. The standardization parameters are parameters (mean, standard deviation) calculated by the standardization processing part 45 of the learning system 4. The standardization processing part 51 does not calculate the parameters (mean, standard deviation), but the rest of the process is the same as that of the standardization processing part 45 of the learning system 4.

The dimension reduction part 52 shown in FIG. 1 performs a dimension reduction process on the radio wave intensities of the plurality of frequencies and calculates a dimensionally reduced input data representing the radio wave intensities of the plurality of frequencies. The dimension reduction part 52 uses the same parameters as the parameters calculated by the dimension reduction part 44 of the learning system 4.

<Learning method of precipitable water vapor estimation model>

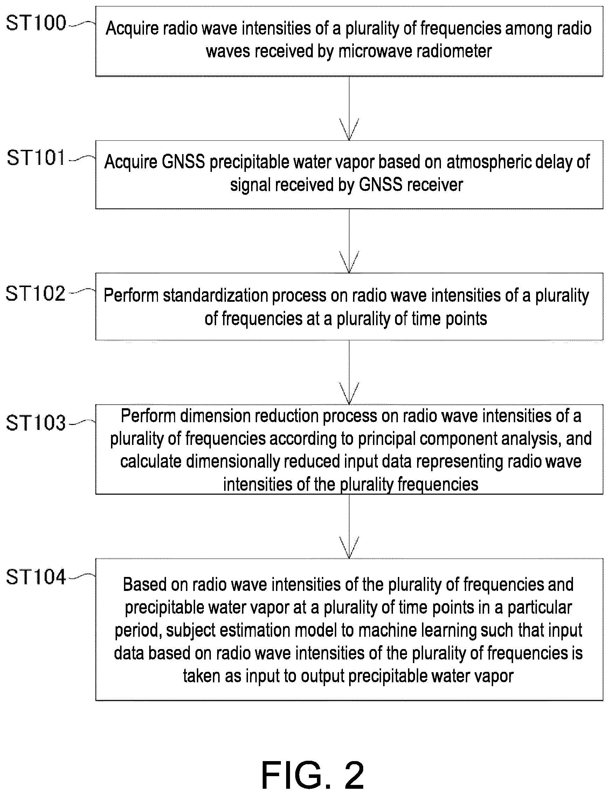

A learning method of the precipitable water vapor estimation model will be described with reference to FIG. 2. As shown in FIG. 2, in step ST100, the radio wave intensity acquisition part 40 acquires radio wave intensities of a plurality of frequencies among radio waves received by the microwave radiometer. In step ST101, the precipitable water vapor acquisition part 41 acquires a precipitable water vapor calculated based on an atmospheric delay of a GNSS signal received by the GNSS receiver. The order of steps ST100 and ST101 is not particularly specified.

In next step ST102, the standardization processing part 45 performs a standardization process on the radio wave intensities of the plurality of frequencies at a plurality of time points. In next step ST103, the dimension reduction part 44 performs a dimension reduction process on the radio wave intensities of the plurality of frequencies according to principal component analysis, and calculates a dimensionally reduced input data representing the radio wave intensities of the plurality of frequencies. In next step ST104, based on the radio wave intensities of the plurality of frequencies and the precipitable water vapor at a plurality of time points in a particular period, the learning part 43 subjects an estimation model to machine learning such that the input data based on the radio wave intensities of the plurality of frequencies are taken as an input to output the precipitable water vapor.

<Precipitable water vapor estimation method>

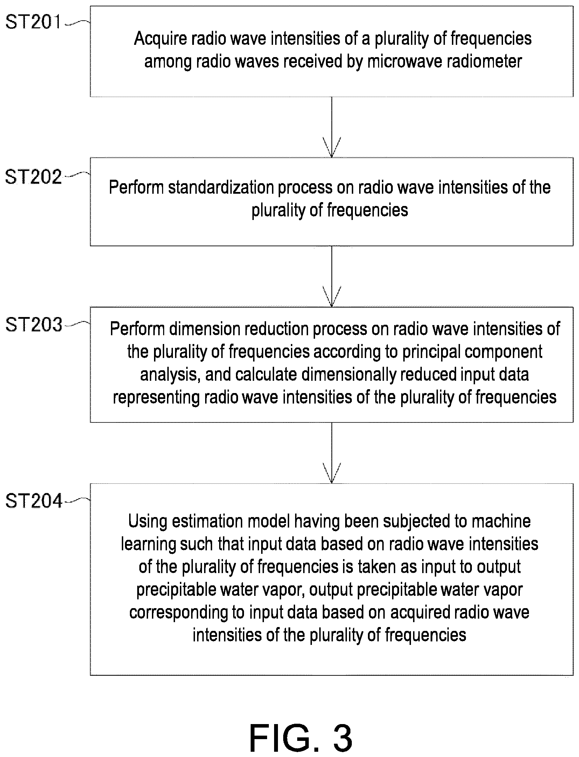

A precipitable water vapor estimation method will be described with reference to FIG. 3. As shown in FIG. 3, in step ST201, the radio wave intensity acquisition part 40 acquires radio wave intensities of a plurality of frequencies among radio waves received by the microwave radiometer. In next step ST202, the standardization processing part 51 performs a standardization process on the radio wave intensities of the plurality of frequencies. In next step ST203, the dimension reduction part 52 performs a dimension reduction process on the radio wave intensities of the plurality of frequencies according to principal component analysis, and calculates a dimensionally reduced input data representing the radio wave intensities of the plurality of frequencies. In next step ST204, using the estimation model 43a which has been subjected to machine learning such that the input data based on the radio wave intensities of the plurality of frequencies is taken as an input to output the precipitable water vapor, the estimation part 50 outputs the precipitable water vapor corresponding to the input data based on the acquired radio wave intensities of the plurality of frequencies.

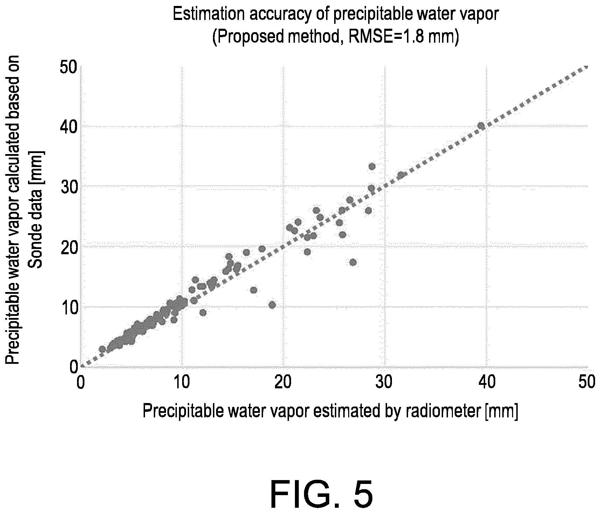

FIG. 5 is a diagram showing comparison between a precipitable water vapor in a period estimated by an estimation model constructed by the learning system 4 and the precipitable water vapor estimation system 5 and a precipitable water vapor in the same period based on Sonde data. The Sonde data are data published by the Japan Meteorological Agency and are actual meteorological observation values measured by flying real balloons equipped with sensors to the sky. As shown in FIG. 5, the root mean square error (RMSE) is 1.8 mm, indicating that a certain degree of accuracy is obtained.

In addition, in the present method, since radio wave intensities of a plurality of frequencies are acquired, even if noise is contained in the radio wave intensities of some frequencies due to adoption of a general-purpose amplifier with a high noise temperature, as a plurality of frequencies are used, the influence of noise can be suppressed. Thus, for example, compared to the case of estimating a precipitable water vapor according to a particular arithmetic expression using two specific frequencies, the present method is considered to be robust against noise. Conversely, even if some noise is contained, since it can be covered with the plurality of frequencies, the equipment used does not necessarily need to have high performance, and it is possible to reduce the cost of the system.

As described above, the learning system 4 of the precipitable water vapor estimation model of this embodiment includes the radio wave intensity acquisition part 40, the precipitable water vapor acquisition part 41, and the learning part 43. The radio wave intensity acquisition part 40 acquires radio wave intensities of a plurality of frequencies among radio waves received by the microwave radiometer 3. The precipitable water vapor acquisition part 41 acquires a precipitable water vapor calculated based on an atmospheric delay of a GNSS signal received by the GNSS receiver 2. Based on the radio wave intensities of the plurality of frequencies and the precipitable water vapor at a plurality of time points in a particular period, the learning part 43 subjects the estimation model 43a to machine learning such that an input data based on the radio wave intensities of the plurality of frequencies is taken as an input to output the precipitable water vapor.

The learning method of the precipitable water vapor estimation model of this embodiment includes steps below. Radio wave intensities of a plurality of frequencies are acquired among radio waves received by the microwave radiometer 3. A precipitable water vapor calculated based on an atmospheric delay of a GNSS signal received by the GNSS receiver 2 is acquired. Based on the radio wave intensities of the plurality of frequencies and the precipitable water vapor at a plurality of time points in a particular period, the estimation model 43a is subjected to machine learning such that an input data based on the radio wave intensities of the plurality of frequencies is taken as an input to output the precipitable water vapor.

The precipitable water vapor estimation system of this embodiment includes the radio wave intensity acquisition part 40 and the estimation part 50. The radio wave intensity acquisition part 40 acquires radio wave intensities of a plurality of frequencies among radio waves received by the microwave radiometer 3. Using the estimation model 43a which has been subjected to machine learning such that an input data based on radio wave intensities of the plurality of frequencies is taken as an input to output a precipitable water vapor, the estimation part 50 outputs the precipitable water vapor corresponding to an input data based on the acquired radio wave intensities of the plurality of frequencies.

The precipitable water vapor estimation method of this embodiment includes steps below. Radio wave intensities of a plurality of frequencies are acquired among radio waves received by the microwave radiometer 3. Using the estimation model 43a which has been subjected to machine learning such that an input data based on radio wave intensities of the plurality of frequencies is taken as an input to output a precipitable water vapor, the precipitable water vapor corresponding to an input data based on the acquired radio wave intensities of the plurality of frequencies is outputted.

According to the learning method, the estimation method, and the system described above, since machine learning is performed using an input data based on radio wave intensities of a plurality of frequencies, machine learning can clarify the correlation between the radio wave intensities and the precipitable water vapor, which could not be clarified with a single frequency because the radio wave intensity contains both water vapor content and cloud water, and it becomes possible to estimate the water vapor content (precipitable water vapor). Further, since the radio wave intensities and the GNSS-based precipitable water vapor at a plurality of time points in a particular period are used, microwave radiometer-based local water vapor data with non-matching absolute values can be converted into reliable local water vapor data with matching absolute values. Highly reliable data can be acquired even without calibrating the microwave radiometer with liquid nitrogen.

As described in this embodiment, the dimension reduction parts 44 and 52 may be included to perform a dimension reduction process on the radio wave intensities of the plurality of frequencies and calculate a dimensionally reduced input data representing the radio wave intensities of the plurality of frequencies. By performing dimension reduction in this manner, since frequencies with good sensitivity processed by the portion of the receiver having good performance are selected from among the plurality of frequencies, estimation may be performed even with a general-purpose inexpensive amplifier. That is, without dimension reduction, frequency bands with poor sensitivity processed by the portion of the receiver having poor performance are directly used for estimation, and the data in the frequency bands with poor sensitivity adversely affect the estimation accuracy. With dimension reduction, it is possible to omit the trouble of manually removing frequencies with poor sensitivity from the plurality of frequencies, and thus it is possible to avoid deterioration of the estimation accuracy.

As described in this embodiment, the dimension reduction parts 44 and 52 may perform dimension reduction according to principal component analysis and select a particular number of principal components from the first order onward as the input data. Thus, principal component analysis may be used for dimension reduction.

As in the learning system 4 of this embodiment, the standardization processing part 45 may be included to perform a standardization process on the radio wave intensities of the plurality of frequencies at a plurality of time points before the dimension reduction process is performed by the dimension reduction part 44. As in the precipitable water vapor estimation system 5 of this embodiment, the standardization processing part 51 may be included to perform a standardization process on the radio wave intensities of the plurality of frequencies using a predetermined standardization parameter before the dimension reduction process is performed by the dimension reduction part 52. Thus, it is possible to appropriately reduce the dimension and improve the estimation accuracy.

As described in this embodiment, the radio wave intensity acquisition part 40 may acquire radio wave intensities of N different frequencies, where n is a natural number of 3 or more, and the dimension reduction parts 44 and 52 may dimensionally reduce the radio wave intensities of the N frequencies to the input data having a number smaller than N. In this manner, by performing dimension reduction, it is possible to reduce the number of dimensions while reproducing the original features that are present in the radio wave intensities of the N frequencies, making it possible to reduce the calculation cost and avoid the curse of dimensionality (overlearning).

A computer program of this embodiment is a computer program according to claim 13. Further, a computer-readable non-transitory recording medium according to this embodiment stores the above program.

Reference Signs List

| | |
|---|---|
| 4 | Learning system |
| 40 | Radio wave intensity acquisition part |
| 41 | Precipitable water vapor acquisition part |
| 43 | Learning part |
| 44 | Dimension reduction part |
| 45 | Standardization processing part |
| 5 | Precipitable water vapor estimation system |
| 50 | Estimation part |
| 51 | Standardization processing part |
| 52 | Dimension reduction part |

**Claims**

1.  A learning system (4) of a precipitable water vapor estimation model, comprising:

    a radio wave intensity acquisition part (40) configured to acquire radio wave intensities of a plurality of frequencies among radio waves received by a microwave radiometer (3);
    a precipitable water vapor acquisition part (41) configured to acquire a precipitable water vapor calculated based on an atmospheric delay of a GNSS signal received by a GNSS receiver (2); and
    a learning part (43) configured to subject an estimation model (43a) to machine learning such that an input data based on the radio wave intensities of the plurality of frequencies is taken as an input to output the precipitable water vapor, based on the radio wave intensities of the plurality of frequencies and the precipitable water vapor at a plurality of time points in a particular period.

2.  The learning system (4) of a precipitable water vapor estimation model according to claim 1, further comprising:
    a dimension reduction part (44) configured to calculate the input data that is dimensionally reduced and that represents the radio wave intensities of the plurality of frequencies based on a dimension reduction process on the radio wave intensities of the plurality of frequencies.

3.  The learning system (4) of a precipitable water vapor estimation model according to claim 2, wherein
    the dimension reduction part (44) selects a particular number of principal components from a first order onward as the input data based on the dimension reduction process according to principal component analysis.

4.  The learning system (4) of a precipitable water vapor estimation model according to claim 2 or 3, further comprising:
    a standardization processing part (45) configured to perform a standardization process on the radio wave intensities of the plurality of frequencies at the plurality of time points before the dimension reduction process is performed by the dimension reduction part (44).

5.  The learning system (4) of a precipitable water vapor estimation model according to any one of claims 2 to 4, wherein

    the radio wave intensity acquisition part (40) acquires radio wave intensities of N different frequencies, where N is a natural number greater than or equal to 3, and
    the dimension reduction part (44) dimensionally reduces the radio wave intensities of the N frequencies to the input data having a number smaller than N.

6.  A precipitable water vapor estimation system (5) comprising:

    a radio wave intensity acquisition part (40) configured to acquire radio wave intensities of a plurality of frequencies among radio waves received by a microwave radiometer (3); and
    an estimation part (50) configured to output a precipitable water vapor corresponding to an input data based on the acquired radio wave intensities of the plurality of frequencies, by using an estimation model (43a) that was subjected to machine learning such that an input data based on radio wave intensities of the plurality of frequencies is taken as an input to output the precipitable water vapor, based on the radio wave intensities of the plurality of frequencies and a precipitable water vapor calculated based on an atmospheric delay of a GNSS signal received by a GNSS receiver (2) at a plurality of time points in a particular period.

7. The precipitable water vapor estimation system (5) according to claim 6, further comprising:
a dimension reduction part (52) calculates the input data that is dimensionally reduced and represents the radio wave intensities of the plurality of frequencies based on a dimension reduction process on the radio wave intensities of the plurality of frequencies.

8. The precipitable water vapor estimation system (5) according to claim 7, wherein
the dimension reduction part (52) selects a particular number of principal components from a first order onward as the input data based on the dimension reduction process according to principal component analysis.

9. The precipitable water vapor estimation system (5) according to claim 7 or 8, further comprising:
a standardization processing part (51) configured to perform a standardization process on the radio wave intensities of the plurality of frequencies using a predetermined standardization parameter before the dimension reduction process is performed by the dimension reduction part (52).

10. The precipitable water vapor estimation system (5) according to any one of claims 7 to 9, wherein

the radio wave intensity acquisition part (40) acquires radio wave intensities of N different frequencies, where N is a natural number greater than or equal to 3, and
the dimension reduction part (52) dimensionally reduces the radio wave intensities of the N frequencies to the input data having a number smaller than N.

11. A learning method of a precipitable water vapor estimation model, comprising:

acquiring radio wave intensities of a plurality of frequencies among radio waves received by a microwave radiometer (3);
acquiring a precipitable water vapor calculated based on an atmospheric delay of a GNSS signal received by a GNSS receiver (2); and
subjecting an estimation model (43a) to machine learning such that an input data based on the radio wave intensities of the plurality of frequencies is taken as an input to output the precipitable water vapor, based on the radio wave intensities of the plurality of frequencies and the precipitable water vapor at a plurality of time points in a particular period.

12. A precipitable water vapor estimation method comprising:

acquiring radio wave intensities of a plurality of frequencies among radio waves received by a microwave radiometer (3); and
outputting a precipitable water vapor corresponding to an input data based on the acquired radio wave intensities of the plurality of frequencies, by using an estimation model (43a) that was subjected to machine learning such that an input data based on radio wave intensities of the plurality of frequencies is taken as an input to output the precipitable water vapor, based on the radio wave intensities of the plurality of frequencies and a precipitable water vapor calculated based on an atmospheric delay of a GNSS signal received by a GNSS receiver (2) at a plurality of time points in a particular period.

13. A computer program comprising instructions to cause the learning system (4) of claim 1 to execute the learning method of a precipitable water vapor estimation model according to claim 11 or to cause the precipitable water vapor estimation system (5) of claim 6 to execute the precipitable water vapor estimation method according to claim 12.

**Patentansprüche**

1. Lernsystem (4) für ein Modell zur Schätzung von Niederschlagswasserdampf, aufweisend:

einen Teil (40) zur Erfassung einer Funkwellenintensität, der so konfiguriert ist, dass er Funkwellenintensitäten einer Vielzahl von Frequenzen unter mittels eines Mikrowellen-Radiometers (3) empfangenen Funkwellen erfasst;
einen Teil (41) zur Erfassung von Niederschlagswasserdampf, der so konfiguriert ist, dass er Niederschlagswasserdampf erfasst, der basierend auf einer atmosphärischen Verzögerung eines mittels eines GNSS-Empfängers (2) empfangenen GNSS-Signals berechnet wird; und

einen Lernteil (43), der so konfiguriert ist, dass er ein Schätzungsmodell (43a) maschinellem Lernen unterzieht, so dass auf den Funkwellenintensitäten der Vielzahl von Frequenzen basierende Eingabedaten als Eingabe genommen werden, um den Niederschlagswasserdampf basierend auf den Funkwellenintensitäten der Vielzahl von Frequenzen und dem Niederschlagswasserdampf zu einer Vielzahl von Zeitpunkten in einer bestimmten Periode auszugeben.

2. Lernsystem (4) für ein Modell zur Schätzung von Niederschlagswasserdampf nach Anspruch 1, ferner aufweisend: einen Dimensionsreduktionsteil (44), der so konfiguriert ist, dass er die Eingabedaten, die dimensionsmäßig reduziert sind und die die Funkwellenintensitäten der Vielzahl von Frequenzen repräsentieren, basierend auf einem Dimensionsreduktionsprozess an den Funkwellenintensitäten der Vielzahl von Frequenzen berechnet.

3. Lernsystem (4) für ein Modell zur Schätzung von Niederschlagswasserdampf nach Anspruch 2, wobei der Dimensionsreduktionsteil (44) eine bestimmte Anzahl an Hauptkomponenten ab einer ersten Ordnung als die Eingabedaten basierend auf dem Dimensionsreduktionsprozess gemäß einer Hauptkomponentenanalyse auswählt.

4. Lernsystem (4) für ein Modell zur Schätzung von Niederschlagswasserdampf nach Anspruch 2 oder 3, ferner aufweisend: einen Normierungsverarbeitungsteil (45), der so konfiguriert ist, dass er einen Normierungsprozess an den Funkwellenintensitäten der Vielzahl von Frequenzen zu der Vielzahl von Zeitpunkten durchführt, bevor der Dimensionsreduktionsprozess vom Dimensionsreduktionsteil (44) durchgeführt wird.

5. Lernsystem (4) für ein Modell zur Schätzung von Niederschlagswasserdampf nach einem der Ansprüche 2 bis 4, wobei

der Teil (40) zur Erfassung einer Funkwellenintensität Funkwellenintensitäten von N verschiedenen Frequenzen erfasst, wobei N eine natürliche Zahl größer als oder gleich 3 ist, und

der Dimensionsreduktionsteil (44) die Funkwellenintensitäten der N Frequenzen dimensionsmäßig auf die Eingabedaten mit einer kleineren Anzahl als N reduziert.

6. System (5) zur Schätzung von Niederschlagswasserdampf, aufweisend:

einen Teil (40) zur Erfassung einer Funkwellenintensität, der so konfiguriert ist, dass er Funkwellenintensitäten einer Vielzahl von Frequenzen unter mittels eines Mikrowellen-Radiometers (3) empfangenen Funkwellen erfasst;

einen Schätzungsteil (50), der so konfiguriert ist, dass er Niederschlagswasserdampf entsprechend auf den erfassten Funkwellenintensitäten der Vielzahl von Frequenzen basierenden Eingabedaten ausgibt, indem ein Schätzungsmodell (43a) verwendet wird, das maschinellem Lernen unterzogen worden ist, so dass auf Funkwellenintensitäten der Vielzahl von Frequenzen basierende Eingabedaten als Eingabe genommen werden, um den Niederschlagswasserdampf basierend auf den Funkwellenintensitäten der Vielzahl von Frequenzen und einem basierend auf einer atmosphärischen Verzögerung eines mittels eines GNSS-Empfängers (2) empfangenen GNSS-Signals berechneten Niederschlagswasserdampf zu einer Vielzahl von Zeitpunkten in einer bestimmten Periode auszugeben.

7. System (5) zur Schätzung von Niederschlagswasserdampf nach Anspruch 6, ferner aufweisend: einen Dimensionsreduktionsteil (52), der die Eingabedaten, die dimensionsmäßig reduziert sind und die Funkwellenintensitäten der Vielzahl von Frequenzen repräsentieren, basierend auf einem Dimensionsreduktionsprozess an den Funkwellenintensitäten der Vielzahl von Frequenzen berechnet.

8. System (5) zur Schätzung von Niederschlagswasserdampf nach Anspruch 7, wobei der Dimensionsreduktionsteil (52) eine bestimmte Anzahl an Hauptkomponenten ab einer ersten Ordnung als die Eingabedaten basierend auf dem Dimensionsreduktionsprozess gemäß einer Hauptkomponentenanalyse auswählt.

9. System (5) zur Schätzung von Niederschlagswasserdampf nach Anspruch 7 oder 8, ferner aufweisend: einen Normierungsverarbeitungsteil (51), der so konfiguriert ist, dass er einen Normierungsprozess an den Funkwellenintensitäten der Vielzahl von Frequenzen unter Verwendung eines vorbestimmten Normierungsparameters durchführt, bevor der Dimensionsreduktionsprozess vom Dimensionsreduktionsteil (52) durchgeführt wird.

10. System (5) zur Schätzung von Niederschlagswasserdampf nach einem der Ansprüche 7 bis 9, wobei

der Teil (40) zur Erfassung einer Funkwellenintensität Funkwellenintensitäten von N verschiedenen Frequenzen erfasst, wobei N eine natürliche Zahl größer als oder gleich 3 ist, und
der Dimensionsreduktionsteil (52) die Funkwellenintensitäten der N Frequenzen dimensionsmäßig auf die Eingabedaten mit einer kleineren Anzahl als N reduziert.

11. Lernverfahren für ein Modell zur Schätzung von Niederschlagswasserdampf, aufweisend:

Erfassen von Funkwellenintensitäten einer Vielzahl von Frequenzen unter mittels eines Mikrowellen-Radiometers (3) empfangenen Funkwellen;
Erfassen von Niederschlagswasserdampf, der basierend auf einer atmosphärischen Verzögerung eines mittels eines GNSS-Empfängers (2) empfangenen GNSS-Signals berechnet wird; und
Unterziehen eines Schätzungsmodells (43a) einem maschinellen Lernen, so dass auf den Funkwellenintensitäten der Vielzahl von Frequenzen basierende Eingabedaten als Eingabe genommen werden, um den Niederschlagswasserdampf basierend auf den Funkwellenintensitäten der Vielzahl von Frequenzen und dem Niederschlagswasserdampf zu einer Vielzahl von Zeitpunkten in einer bestimmten Periode auszugeben.

12. Verfahren zur Schätzung von Niederschlagswasserdampf, aufweisend:

Erfassen von Funkwellenintensitäten einer Vielzahl von Frequenzen unter mittels eines Mikrowellen-Radiometers (3) empfangenen Funkwellen; und
Ausgeben eines Niederschlagswasserdampfes entsprechend auf den erfassten Funkwellenintensitäten der Vielzahl von Frequenzen basierenden Eingabedaten, indem ein Schätzungsmodell (43a) verwendet wird, das maschinellem Lernen unterzogen worden ist, so dass auf Funkwellenintensitäten der Vielzahl von Frequenzen basierende Eingabedaten als Eingabe genommen werden, um den Niederschlagswasserdampf basierend auf den Funkwellenintensitäten der Vielzahl von Frequenzen und einem basierend auf einer atmosphärischen Verzögerung eines mittels eines GNSS-Empfängers (2) empfangenen GNSS-Signals berechneten Niederschlagswasserdampf zu einer Vielzahl von Zeitpunkten in einer bestimmten Periode auszugeben.

13. Computerprogramm, das Anweisungen aufweist, um zu veranlassen, dass das Lernsystem (4) nach Anspruch 1 das Lernverfahren für ein Modell zur Schätzung von Niederschlagswasserdampf nach Anspruch 11 ausführt, oder zu veranlassen, dass das System (5) zur Schätzung von Niederschlagswasserdampf nach Anspruch 6 das Verfahren zur Schätzung von Niederschlagswasserdampf nach Anspruch 12 ausführt.

## Revendications

1. Système d'apprentissage (4) d'un modèle d'estimation de vapeur d'eau précipitable, comprenant :

une partie d'acquisition d'intensité d'onde radio (40) configurée pour acquérir des intensités d'onde radio d'une pluralité de fréquences parmi des ondes radio reçues par un radiomètre à micro-ondes (3) ;
une partie d'acquisition de vapeur d'eau précipitable (41) configurée pour acquérir une vapeur d'eau précipitable calculée sur la base d'un retard atmosphérique d'un signal GNSS reçu par un récepteur GNSS (2) ; et
une partie d'apprentissage (43) configurée pour soumettre un modèle d'estimation (43a) à un apprentissage automatique de sorte qu'une donnée d'entrée sur la base des intensités d'ondes radio de la pluralité de fréquences soit prise comme entrée pour délivrer en sortie la vapeur d'eau précipitable, sur la base des intensités d'ondes radio de la pluralité de fréquences et de la vapeur d'eau précipitable à une pluralité de points temporels dans une période particulière.

2. Système d'apprentissage (4) d'un modèle d'estimation de vapeur d'eau précipitable selon la revendication 1, comprenant en outre :
une partie de réduction de dimension (44) configurée pour calculer la donnée d'entrée qui est réduite dimensionnellement et qui représente les intensités d'ondes radio de la pluralité de fréquences sur la base d'un processus de réduction de dimension sur les intensités d'ondes radio de la pluralité de fréquences.

3. Système d'apprentissage (4) d'un modèle d'estimation de vapeur d'eau précipitable selon la revendication 2, dans lequel
la partie de réduction de dimension (44) sélectionne un nombre particulier de composantes principales à partir d'un premier ordre croissant comme donnée d'entrée sur la base du processus de réduction de dimension selon l'analyse en composantes principales.

4. Système d'apprentissage (4) d'un modèle d'estimation de vapeur d'eau précipitable selon la revendication 2 ou 3, comprenant en outre :
une partie de traitement de standardisation (45) configurée pour effectuer un processus de standardisation sur les intensités d'onde radio de la pluralité de fréquences à la pluralité de points temporels avant que le processus de réduction de dimension ne soit effectué par la partie de réduction de dimension (44).

5. Système d'apprentissage (4) d'un modèle d'estimation de vapeur d'eau précipitable selon l'une des revendications 2 à 4, dans lequel

la partie d'acquisition d'intensité d'onde radio (40) acquiert des intensités d'onde radio de N fréquences différentes, où N est un nombre naturel supérieur ou égal à 3, et
la partie de réduction de dimension (44) réduit dimensionnellement les intensités d'ondes radio des N fréquences à la donnée d'entrée ayant un nombre inférieur à N.

6. Système d'estimation de vapeur d'eau précipitable (5) comprenant :

une partie d'acquisition d'intensité d'onde radio (40) configurée pour acquérir des intensités d'onde radio d'une pluralité de fréquences parmi des ondes radio reçues par un radiomètre à micro-ondes (3) ; et
une partie d'estimation (50) configurée pour délivrer en sortie une vapeur d'eau précipitable correspondant à une donnée d'entrée sur la base des intensités d'ondes radio acquises de la pluralité de fréquences, en utilisant un modèle d'estimation (43a) qui a été soumis à un apprentissage automatique de sorte qu'une donnée d'entrée sur la base des intensités d'ondes radio de la pluralité de fréquences soit prise comme entrée pour délivrer en sortie la vapeur d'eau précipitable, sur la base des intensités d'onde radio de la pluralité de fréquences et d'une vapeur d'eau précipitable calculée sur la base d'un retard atmosphérique d'un signal GNSS reçu par un récepteur GNSS (2) à une pluralité de points temporels dans une période particulière.

7. Système d'estimation de vapeur d'eau précipitable (5) selon la revendication 6, comprenant en outre :
une partie de réduction de dimension (52) calcule la donnée d'entrée qui est réduite dimensionnellement et représente les intensités d'ondes radio de la pluralité de fréquences sur la base d'un processus de réduction de dimension sur les intensités d'ondes radio de la pluralité de fréquences.

8. Système d'estimation de vapeur d'eau précipitable (5) selon la revendication 7, dans lequel
la partie de réduction de dimension (52) sélectionne un nombre particulier de composantes principales à partir d'un premier ordre croissant comme donnée d'entrée sur la base du processus de réduction de dimension selon l'analyse en composantes principales.

9. Système d'estimation de vapeur d'eau précipitable (5) selon la revendication 7 ou 8, comprenant en outre :
une partie de traitement de standardisation (51) configurée pour effectuer un processus de standardisation sur les intensités d'onde radio de la pluralité de fréquences à l'aide d'un paramètre de standardisation prédéterminé avant que le processus de réduction de dimension ne soit effectué par la partie de réduction de dimension (52).

10. Système d'estimation de vapeur d'eau précipitable (5) selon l'une des revendications 7 à 9, dans lequel

la partie d'acquisition d'intensité d'onde radio (40) acquiert des intensités d'onde radio de N fréquences différentes, où N est un nombre naturel supérieur ou égal à 3, et
la partie de réduction de dimension (52) réduit dimensionnellement les intensités d'ondes radio des N fréquences à la donnée d'entrée ayant un nombre inférieur à N.

11. Procédé d'apprentissage d'un modèle d'estimation de vapeur d'eau précipitable, comprenant :

acquérir des intensités d'ondes radio d'une pluralité de fréquences parmi des ondes radio reçues par un radiomètre à micro-ondes (3) ;

acquérir une vapeur d'eau précipitable calculée sur la base d'un retard atmosphérique d'un signal GNSS reçu par un récepteur GNSS (2) ; et

soumettre un modèle d'estimation (43a) à un apprentissage automatique de sorte qu'une donnée d'entrée sur la base des intensités d'ondes radio de la pluralité de fréquences soit prise comme entrée pour délivrer en sortie la vapeur d'eau précipitable, sur la base des intensités d'ondes radio de la pluralité de fréquences et de la vapeur d'eau précipitable à une pluralité de points temporels dans une période particulière.

12. Procédé d'estimation de vapeur d'eau précipitable comprenant les étapes :

acquérir des intensités d'ondes radio d'une pluralité de fréquences parmi des ondes radio reçues par un radiomètre à micro-ondes (3) ; et

délivrer en sortie une vapeur d'eau précipitable correspondant à une donnée d'entrée sur la base des intensités d'ondes radio acquises de la pluralité de fréquences, en utilisant un modèle d'estimation (43a) qui a été soumis à un apprentissage automatique de sorte qu'une donnée d'entrée sur la base des intensités d'ondes radio de la pluralité de fréquences soit prise comme entrée pour délivrer en sortie la vapeur d'eau précipitable, sur la base des intensités d'onde radio de la pluralité de fréquences et d'une vapeur d'eau précipitable calculée sur la base d'un retard atmosphérique d'un signal GNSS reçu par un récepteur GNSS (2) à une pluralité de points temporels dans une période particulière.

13. Programme d'ordinateur comprenant des instructions pour amener le système d'apprentissage (4) de la revendication 1 à exécuter le procédé d'apprentissage d'un modèle d'estimation de vapeur d'eau précipitable selon la revendication 11 ou pour amener le système d'estimation de vapeur d'eau précipitable (5) de la revendication 6 à exécuter le procédé d'estimation de vapeur d'eau précipitable selon la revendication 12.

FIG. 1

ST100 — Acquire radio wave intensities of a plurality of frequencies among radio waves received by microwave radiometer

ST101 — Acquire GNSS precipitable water vapor based on atmospheric delay of signal received by GNSS receiver

ST102 — Perform standardization process on radio wave intensities of a plurality of frequencies at a plurality of time points

ST103 — Perform dimension reduction process on radio wave intensities of a plurality of frequencies according to principal component analysis, and calculate dimensionally reduced input data representing radio wave intensities of the plurality frequencies

ST104 — Based on radio wave intensities of the plurality of frequencies and precipitable water vapor at a plurality of time points in a particular period, subject estimation model to machine learning such that input data based on radio wave intensities of the plurality of frequencies is taken as input to output precipitable water vapor

# FIG. 2

ST201 — Acquire radio wave intensities of a plurality of frequencies among radio waves received by microwave radiometer

ST202 — Perform standardization process on radio wave intensities of the plurality of frequencies

ST203 — Perform dimension reduction process on radio wave intensities of the plurality of frequencies according to principal component analysis, and calculate dimensionally reduced input data representing radio wave intensities of the plurality of frequencies

ST204 — Using estimation model having been subjected to machine learning such that input data based on radio wave intensities of the plurality of frequencies is taken as input to output precipitable water vapor, output precipitable water vapor corresponding to input data based on acquired radio wave intensities of the plurality of frequencies

# FIG. 3

FIG. 4

Estimation accuracy of precipitable water vapor
(Proposed method, RMSE=1.8 mm)

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6067852 A
- JP 2010060444 A

- US 2014035779 A1

### Non-patent literature cited in the description

- Atmospheric Water Vapor Retrieval by Means of Both a GPS Network and a Microwave Radiometer During an Experimental Campaign in Cagliari, Italy, in 1999. **BASILI et al.** IEEE TRANSACTIONS ON GEOSCIENCE AND REMOTE SENSING. IEEE, 01 November 2001, vol. 39